(19) Europäisches Patentamt / European Patent Office / Office européen des brevets

(11) **EP 4 236 516 A1**

(12) **EUROPEAN PATENT APPLICATION**
published in accordance with Art. 153(4) EPC

(43) Date of publication:
**30.08.2023  Bulletin 2023/35**

(21) Application number: **20958252.7**

(22) Date of filing: **22.10.2020**

(51) International Patent Classification (IPC):
**H04W 72/02** (2009.01)

(52) Cooperative Patent Classification (CPC):
**H04W 72/02**

(86) International application number:
**PCT/CN2020/122997**

(87) International publication number:
**WO 2022/082670 (28.04.2022 Gazette 2022/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **FUJITSU LIMITED**
**Kawasaki-shi, Kanagawa 211-8588 (JP)**

(72) Inventors:
• **ZHANG, Jian**
  **Beijing 100027 (CN)**
• **JI, Pengyu**
  **Beijing 100027 (CN)**
• **WANG, Xin**
  **Beijing 100027 (CN)**
• **JIANG, Qinyan**
  **Beijing 100027 (CN)**
• **CHEN, Zhe**
  **Beijing 100027 (CN)**
• **ZHANG, Lei**
  **Beijing 100027 (CN)**

(74) Representative: **Haseltine Lake Kempner LLP**
**Cheapside House**
**138 Cheapside**
**London EC2V 6BJ (GB)**

(54) **SIDELINK RESOURCE SELECTION METHOD AND APPARATUS**

(57)     Embodiments of the present disclosure provide a method and an apparatus for selecting sidelink resources, the method including: determining, by a terminal equipment, a first monitoring time period at least according to a service periodicity, a last time unit of a sensing time period and a last time unit of a selection time period; monitoring sidelink control information in the first monitoring time period; and excluding one or more candidate resources in the selection time period according to the received sidelink control information.

**Fig. 3**

**Description**

Technical Field

Embodiments of the present disclosure relate to the field of communication technology.

Background

For technologies related to vehicle communication, including V2X (Vehicle to Everything), P2X (Pedestrian to Everything), and the like (hereinafter also referred to collectively as V2X), a transmitting device may directly communicate with a receiving device via sidelink. Both current long term evolution (LTE) and new radio (NR) systems support V2X communication, i.e. LTE V2X and NR V2X.

For the sidelink, sidelink control information (SCI) is carried by a physical sidelink control channel (PSCCH), sidelink data information is carried by a physical sidelink shared channel (PSSCH), and sidelink feedback information (ACK/NACK) is carried by a physical sidelink feedback channel (PSFCH). The LTE V2X defines the PSCCH and the PSSCH. The NR V2X defines the PSCCH, the PSSCH and the PSFCH.

The transmitting device in the sidelink may autonomously select time-frequency resources for information transmission based on a result of sensing. The sensing includes monitoring the SCI, measuring reference signal received power (RSRP), and measuring the received signal strength indicator (RSSI), and the like. By sensing, resources that have been reserved by other devices can be avoided at the time of resource selection, and thus collision with sidelink transmissions of other devices can be avoided, thereby avoiding interference.

For autonomous resource selection, the following schemes are currently included: full sensing, partial sensing and random selection. For full sensing, the device performs sensing in each subframe or slot, which can effectively avoid interference, but continuous sensing means continuous power consumption, although this is not a problem for a vehicle device in the V2X, for a pedestrian device in the P2X, device power consumption is also an important factor to consider. For partial sensing, the device does not need to perform sensing in each subframe or slot, but only needs to perform sensing in a partial subframe or slot, which is advantageous for power reduction of the device, e.g., for a transmitting device of a pedestrian in the P2X that does not have a sufficient power supply, power can be saved considerably. For random selection, the device may not perform sensing at all. The three methods offer a compromise between avoiding interference and saving power to varying degrees. The LTE V2X supports full sensing, partial sensing and random selection. The NR V2X currently does not support for partial sensing.

It should be noted that, the above introduction to the background is merely for the convenience of clear and complete description of the technical solution of the present disclosure, and for the convenience of understanding of persons skilled in the art. It cannot be regarded that the above technical solution is commonly known to persons skilled in the art just because that the solution has been set forth in the backgroud of the present disclosure.

Summary

The inventor has found that compared to LTE V2X, the NR V2X supports a short periodic service (a service with a periodicity less than 100 milliseconds) with more periodicities. More specifically, for the LTE V2X, the periodicity of the short periodic service can only be 20 milliseconds and 50 milliseconds, and for the NR V2X, the periodicity of the short periodic service may be 1 millisecond to 99 milliseconds. The NR V2X currently does not support partial sensing, and the partial sensing of the conventional LTE V2X cannot avoid the resources reserved by the NR V2X short periodic service, so the collision and the interference caused thereby cannot be avoided, and thus, the reliability of V2X transmission is affected, for example, the personal safety of pedestrians in P2X cannot be guaranteed.

To address at least one of the above problems, embodiments of the present disclosure provide a method and an apparatus for selecting sidelink resources.

According to one aspect of the embodiment of the present disclosure, there is provided with a method for selecting sidelink resources, including:

determining, by a terminal equipment, a first monitoring time period at least according to a service periodicity, a last time unit of a sensing time period and a last time unit of a selection time period;
monitoring sidelink control information in the first monitoring time period; and
excluding one or more candidate resources in the selection time period according to the received sidelink control information.

According to another aspect of the embodiment of the present disclosure, there is provided with an apparatus for selecting sidelink resources, including:

a determining portion configured to determine a first monitoring time period at least according to a service periodicity, a last time unit of a sensing time period and a last time unit of a selection time period;

a monitoring portion configured to monitor sidelink control information in the first monitoring time period; and

an excluding portion configured to exclude one or more candidate resources in the selection time period according to the received sidelink control information.

According to another aspect of the embodiment of the present disclosure, there is provided with a communication system, including:

a terminal equipment configured to determine a first monitoring time period at least according to a service periodicity, a last time unit of a sensing time period and a last time unit of a selection time period; monitor sidelink control information in the first monitoring time period; and exclude one or more candidate resources in the selection time period according to the received sidelink control information.

One of the advantageous effects of the embodiments of the present disclosure is that, the terminal equipment determines a first monitoring time period at least according to a service periodicity, a last time unit of a sensing time period and a last time unit of a selection time period; and monitors the sidelink control information in the first monitoring time period. Hence, a resource collision with the short periodic service can be effectively avoided, thereby improving the reliability of the V2X, such as ensuring the pedestrian safety in the P2X.

With reference to the Description and drawings below, a specific embodiment of the present disclosure is disclosed in detail, which specifies the manner in which the principle of the present disclosure can be adopted. It should be understood that, the scope of the embodiment of the present disclosure is not limited. Within the scope of the spirit and clause of the appended claims, the embodiment of the present disclosure includes many variations, modifications and equivalents.

The features described and/or shown for one embodiment can be used in one or more other embodiments in the same or similar manner, can be combined with the features in other embodiments or replace the features in other embodiments.

It should be emphasized that, the term "include/comprise" refers to, when being used in the text, existence of features, parts, steps or assemblies, without exclusion of existence or attachment of one or more other features, parts, steps or assemblies.

Description of Drawings

Elements and features described in one drawing or one embodiment of embodiments of the present disclosure may be combined with elements and features illustrated in one or more other drawings or embodiments. Furthermore, in the drawings, like reference numerals refer to corresponding parts in the several drawings and may be used to indicate corresponding parts used in more than one embodiment.

FIG. 1 is a schematic diagram of a communication system according to an embodiment of the present disclosure;

FIG. 2 is an exemplary diagram of sensing of an embodiment of the present disclosure;

FIG. 3 is a schematic diagram of a resource selection method according to an embodiment of the present disclosure;

FIG. 4 is an exemplary diagram of determining a first monitoring time period according to an embodiment of the present disclosure;

FIG. 5 is an exemplary diagram of a first monitoring time period according to an embodiment of the present disclosure;

FIG. 6 is another exemplary diagram of a first monitoring time period according to an embodiment of the present disclosure;

FIG. 7 is another exemplary diagram of a first monitoring time period according to an embodiment of the present disclosure;

FIG. 8 is another exemplary diagram of a first monitoring time period according to an embodiment of the present disclosure;

FIG. 9 is another exemplary diagram of a first monitoring time period according to an embodiment of the present disclosure;

FIG. 10 is another exemplary diagram of a first monitoring time period according to an embodiment of the present disclosure;

FIG. 11 is another exemplary diagram of a first monitoring time period according to an embodiment of the present disclosure;

FIG. 12 is an exemplary diagram of a monitoring time period according to an embodiment of the present disclosure;

FIG. 13 is an exemplary diagram of a monitoring time window according to an embodiment of the present disclosure;

FIG. 14 is an exemplary diagram of a monitoring time window according to an embodiment of the present disclosure;

FIG. 15 is a schematic diagram of an apparatus for selecting sidelink resources according to an embodiment of the present disclosure;

FIG. 16 is a schematic diagram of a network device according to an embodiment of the present disclosure;

FIG. 17 is a schematic diagram of a terminal equipment according to an embodiment of the present disclosure.

Detailed Description

With reference to the drawings, the foregoing and other features of the present disclosure will become apparent through the following description. The Description and drawings specifically disclose the particular embodiment of the present disclosure, showing part of the embodiment in which the principle of the present disclosure can be adopted, it should be understood that the present disclosure is not limited to the described embodiment, on the contrary, the present disclosure includes all modifications, variations and equivalents that fall within the scope of the appended claims.

In embodiments of the present disclosure, the terms "first," "second," and the like are used to distinguish different elements from each other in terms of appellation, but do not denote the spatial arrangement or temporal order or the like of these elements, and these elements should not be limited by these terms. The term "and/or" includes any one and all combinations of one or more of the associated listed terms. The terms "containing", "including", "having" and the like refer to presence of the stated features, elements, components or assemblies, but do not exclude presence or addition of one or more other features, elements, components or assemblies.

In embodiments of the present disclosure, the singular form "a," "the" and the like includes the plural form, and is to be understood in a broad sense as "a kind" or "a type" and is not limited to "one"; in addition, the term "said" is to be understood to include both singular and plural forms, unless otherwise specified clearly in the context. In addition, the term "according to" shall be understood to mean "at least partially according to ..." and the term "based on" shall be understood to mean "based at least partially on ...", unless otherwise specified clearly in the context.

In embodiments of the present disclosure, the term "communication network" or "wireless communication network" may refer to a network that conforms to any communication standard, such as long term evolution (LTE), LTE-Advanced (LTE-A), wideband code division multiple access (WCDMA), high-speed packet access (HSPA), and the like.

Also, the communication between the devices in the communication system may be performed according to a communication protocol at any stage, for example, but not limited to, the following communication protocols: 1G, 2G, 2.5G, 2.75G, 3G, 4G, 4.5G and 5G, New Radio, and the like, and/or other communication protocols currently known or to be developed in the future.

In embodiments of the present disclosure, the term "network device" refers, for example, to a device in the communication system that accesses a terminal equipment to the communication network and provides a service for the terminal equipment. Network devices may include, but are not limited to, a base station (BS), an access point (AP), a transmission reception point (TRP), a broadcast transmitter, a mobile management entity (MME), a Gateway, a server, a radio network controller (RNC), a base station controller (BSC), etc.

The base station may include, but is not limited to, a node B (NodeB or NB), an evolved node B (eNodeB or eNB), a 5G base station (gNB), and the like, and may further include a remote radio head (RRH), a remote radio unit (RRU), a relay or a low power node (e.g. femto, pico, etc.). And the term "base station" may include some or all of their functions, and each base station may provide communication coverage for a particular geographic area. The term "cell" may refer to a base station and/or its coverage area, depending on the context in which the term is used.

In embodiments of the present disclosure, the term "user equipment" or "terminal device" (or terminal equipment) refers, for example, to a device that accesses a communication network and receives network services through a network device. The terminal equipment may be fixed or mobile and may also be referred to as a mobile station (MS), a terminal, a subscriber station (SS), an access terminal (AT), a station, etc.

The terminal equipment may include, but is not limited to, a cellular phone, a personal digital assistant (PDA), a wireless modem, a wireless communication device, a handheld device, a machine type communication device, a laptop computer, a cordless phone, a smart phone, a smart watch, a digital camera, etc.

For another example, in a scenario such as Internet of Things (IoT) or the like, the terminal equipment may also be a machine or an apparatus for monitoring or measuring, such as but not limited to, a machine type communication (MTC) terminal, a vehicle-mounted communication terminal, a device to device (D2D) terminal, a machine to machine (M2M) terminal, etc.

Furthermore, the term "network side" or "network device side" refers to a side of the network, which may be a certain base station or may include one or more network devices as above. The term "user side" or "terminal side" or "terminal equipment side" refers to a side of a user or terminal, which may be a certain UE or may include one or more terminal equipments as above. Herein, a "device" may refer to both a network device and a terminal equipment unless otherwise specified.

The scenario of the embodiments of the present disclosure is described below by way of examples, but the present disclosure is not limited thereto.

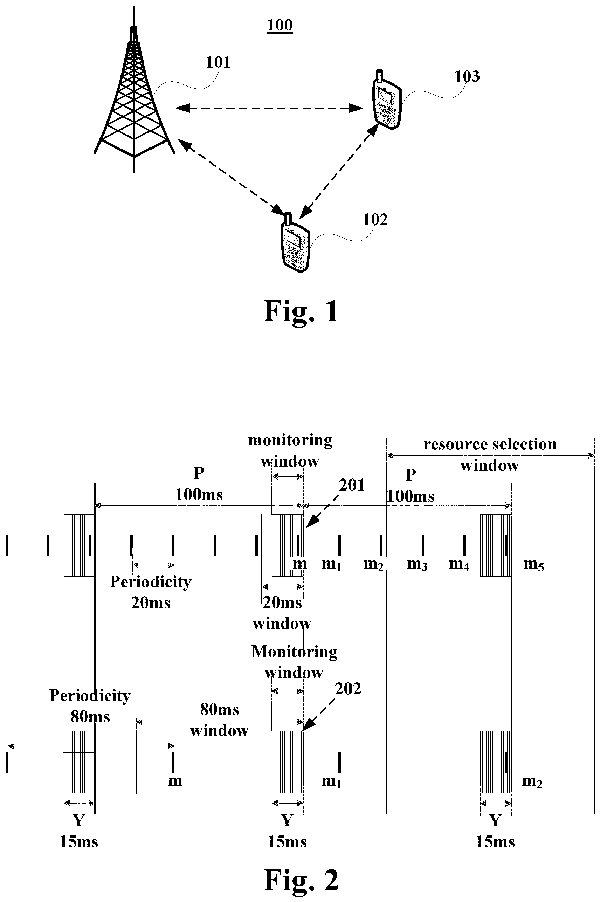

FIG. 1 is a schematic diagram of a communication system according to an embodiment of the present disclosure, schematically illustrating a case where a terminal equipment and a network device are taken as examples. As shown in FIG. 1, the communication system 100 may include a network device 101 and terminal equipments 102 and 103. For the sake of simplicity, FIG. 1 gives illustration by taking only one terminal equipment and one network device as examples, but the embodiment of the present disclosure is not limited thereto.

In an embodiment of the present disclosure, existing services or services that can be implemented in the future can be transmitted between the network device 101 and the terminal equipments 102 and 103. For example, these services may include, but are not limited to, enhanced Mobile Broadband (eMBB), massive Machine Type Communication (mMTC) and Ultra-Reliable and Low-Latency Communication (URLLC), etc.

It should be noted that FIG. 1 shows that the terminal equipments 102 and 103 are both within the coverage of the network device 101, but the present disclosure is not limited thereto. Both terminal equipments 102 and 103 may not be within the coverage of the network device 101, or one terminal equipment 102 may be within the coverage of the network device 101 and the other terminal equipment 103 may be outside the coverage of the network device 101.

In an embodiment of the present disclosure, sidelink transmission may be performed between the two terminal equipments 102 and 103. For example, both terminal equipments 102 and 103 may perform sidelink transmission within the coverage of the network device 101 to implement V2X communication, or may also perform sidelink transmission outside the coverage of the network device 101 to implement V2X communication; or alternatively, one terminal equipment 102 is within the coverage of the network device 101 and the other terminal equipment 103 is outside the coverage of the network device 101 for sidelink transmission to implement V2X communication.

In an embodiment of the present disclosure, the terminal equipments 102 and/or 103 may autonomously select sidelink resources (i.e., adopting Mode 2), in which case the sidelink transmission may be independent of the network device 101, i.e., the network device 101 is optional. Of course, in the embodiment of the present disclosure, autonomous selection of the sidelink resources (i.e., adopting Mode 2) and allocation of the sidelink resources by the network device can be combined, and the embodiment of the present disclosure is not limited thereto.

In the LTE V2X, the terminal equipment may obtain the sidelink transmission resource by processes of sensing detection and resource selection, wherein the sensing may be continuously performed to obtain the occupation situation of the resources in the resource pool. For example, the terminal equipment may estimate resource occupancy in the subsequent time period (referred to as a selection window or selection time period) according to the resource occupancy in the preceding time period (referred to as a sensing window or sensing time period).

For example, the steps of LTE V2X partial sensing can refer to the contents in 3GPP TS 36.213 V15.2.0, section 14.1.1.6, etc. and the main steps of LTE V2X partial sensing can be described in the following Table 1:

Table 1

| |
|---|
| (1) A candidate resource $R_{x,y}$ is defined as continuous $L_{subCH}$ sub-channels including a sub-channel $x + j$ ($j = 0, ...,$ $L_{subCH}$ - 1) located in a sub-frame $t_y^{SL}$; the device determines $Y$ sub-frames within a resource selection window $[n + T_1, n + T_2]$ on the basis of implementation; $M_{total}$ denotes the total number of candidate resources within $Y$ sub-frames. |
| (2) Assuming that the sub-frame $t_y^{SL}$ is one sub-frame of $Y$ sub-frames, and if the k$^{th}$ bit of the high layer parameter *gapCandidateSensing* is set to 1, the device monitors the sub-frame $t_{y-k \times P_{step}}^{SL}$; $P_{step}$ denotes the result after 100 milliseconds conversion into units of logical sub-frames. |
| (3) The RSRP threshold $Th_{a,b}$ is determined; a denotes the transmitting priority and b denotes the receiving priority. |
| (4) The set $S_A$ is initialized as a union set of all candidate resources $R_{x,y}$ in the $Y$ sub-frames; the set $S_B$ is initialized as an empty set. |
| (5) The device excludes candidate resources $R_{x,y}$ from the set $S_A$, where $R_{x,y}$ satisfies all the following conditions: <br><br> - The device receives the SCI in a sub-frame $t_m^{SL}$ (logical sub-frame m); the SCI indicates a periodicity related parameter $P_{rsvp\_RX}$ and a reception priority $prio_{Rx}$. <br><br> - The RSRP measurement result determined based on the SCI is higher than the RSRP threshold $Th_{prioTX,prioRX}$; $prio_{TX}$ is the transmitting priority from a higher layer. |

(continued)

> - The reserved resource determined based on the SCI received in the sub-frame $t_m^{SL}$ (logical sub-frame m), or based on the SCI which is assumed can be received in the sub-frame (logical sub-frame m + q $\times$ $P_{step}$ $\times$ $P_{rsvp\_RX}$) overlaps with the candidate resource $R_{x,y+j\times P'_{rsvp\_TX}}$ ; $j$ = 0,1,$C_{resel}$ - 1; $C_{resel}$ denotes the number of periodicitys that a device needs to transmit, and $P'_{rsvp\_TX}$ denotes a periodicity in the unit of a logical sub-frame; $q$ = 1,2,..., $Q$ ; if $P_{rsvp\_RX}$ < 1 and $y'$ - m $\le$ $P_{step}$ $\times$ $P_{rsvp\_RX}$ + $P_{step}$, then $Q = \dfrac{1}{P_{rsvp\_RX}}$ , where $t_{y'}^{SL}$ is the last sub-frame of the $Y$ sub-frames; otherwise, $Q$ = 1.
>
> (6) If the number of candidate resources in the set $S_A$ is less than 0.2 $\cdot$ $M_{total}$, $Th_{a,b}$ is increased by 3dB, and then the process jumps to step (4) to repeat the steps.
>
> (7) For the candidate resources $R_{x,y}$ in the set $S_A$, the metric $E_{x,y}$ is defined as the linear average of the RSSI measured on the sub-channel x + k (k = 0,..., $L_{subCH}$ - 1) within the sub-frames monitored in step (2). The above monitored sub-frames may be denoted as $t_{y-P_{step}*j}^{SL}$ , where $j$ is a non-negative integer.
>
> (8) The device moves the candidate resource $R_{x,y}$ with the smallest metric $E_{x,y}$ from the set $S_A$ to the set $S_B$. This step is repeated until the number of candidate resources in the set $S_B$ is greater than or equal to 0.2 $\cdot$ $M_{total}$.
>
> (9) The device reports the set $S_B$ to the higher layer.

With regard to autonomous resource selection (Mode 2) of Rel-16 NR V2X, the terminal equipment performs resource selection and transmission based on a sensing result of itself, which can avoid interference or collision between devices to a certain extent. The steps for resource selection can be found in sub-section 8.1.4 of Standard TS 38.214 V16.2.0. Partial sensing is not supported by NR V2X currently.

Compared to LTE V2X, NR V2X supports short periodic service with more periodicities. More specifically, for the LTE V2X, the periodicity of the short periodic service can only be 20 milliseconds and 50 milliseconds, and for the NR V2X, the periodicity of the short periodic service can be 1 millisecond to 99 milliseconds. The NR V2X currently does not support partial sensing, and the partial sensing of the conventional LTE V2X cannot avoid the resources reserved by the NR V2X short periodic service, so the collision and the interference caused thereby cannot be avoided, and thus, the reliability of V2X transmission is affected, for example, the personal safety of pedestrians in P2X cannot be guaranteed.

FIG. 2 is an exemplary diagram of sensing of an embodiment of the present disclosure. As shown in FIG. 2, if LTE V2X partial sensing is used, only if the short periodic service satisfies the condition $y'$ - m $\le$ $P_{step}$ $\times$ $P_{rsvp\_RX}$ + $P_{step}$, the device will avoid the short periodic service in resource selection. Satisfying the above condition is in fact equivalent to the device avoiding a short periodic service at resource selection only if the SCI of the short periodic service is received (or monitored) within the monitoring window. The time length of the monitoring window is less than or equal to the periodicity of the short periodic service. The monitoring window determined according to the above conditions is shown in FIG. 2.

As shown in FIG. 2, assuming that the Y logical sub-frames are 15 milliseconds in time, the device monitors the logical sub-frame y - 100 and the logical sub-frame y - 200 for a logical frame y among the Y logical sub-frames. The logical sub-frame refers to a sub-frame within a resource pool. For the logical sub-frame x, its corresponding physical sub-frame is denoted as $t_x^{SL}$ .

According to the LTE V2X partial sensing, for the short periodic service with a periodicity of 20 milliseconds, the device determines a monitoring window of 15 milliseconds as shown in the upper part of FIG. 2. As shown in the upper part of FIG. 2, if the periodicity of the short periodic service is 20 milliseconds, the resource m of the short periodic service of 20 milliseconds can be monitored in the monitoring window of 15 milliseconds (as shown in 201), so the device can avoid the periodic service of 20 milliseconds in the resource selection.

According to the LTE V2X partial sensing, for the short periodic service with a periodicity of 80 milliseconds, the device determines a monitoring window of 15 milliseconds as shown in the lower part of FIG. 2. As shown in the lower part of FIG. 2, if the periodicity of the short periodic service is 80 milliseconds, the resource of the short periodic service of 80 milliseconds cannot be monitored in the monitoring window of 15 milliseconds (as shown in 202) (none of m, m1 and m2 fall within this time period), thus the short periodic service with the periodicity of 80 milliseconds cannot be avoided. Therefore, LTE V2X partial sensing cannot avoid short periodic services other than that of 20 milliseconds and 50 milliseconds. The embodiments of the present disclosure are described below with respect to these problems.

In the embodiment of the present disclosure, the sidelink is described by taking V2X as an example, but the present disclosure is not limited thereto, and can also be applied to a sidelink transmission scenario other than V2X. In the following description, the terms "sidelink" and "V2X" may be interchanged, the terms "PSFCH" and "sidelink feedback channel" may be interchanged, the terms "PSCCH" and "sidelink control channel" or "sidelink control information" may be interchanged, and the terms "PSSCH" and "sidelink data channel" or "sidelink data" may also be interchanged without causing confusion.

In addition, transmitting or receiving PSCCH can be understood as transmitting or receiving sidelink control information carried by the PSCCH; transmitting or receiving PSSCH can be understood as transmitting or receiving sidelink data carried by the PSSCH; transmitting or receiving the PSFCH can be understood as transmitting or receiving sidelink feedback information carried by the PSFCH. Sidelink transmission can be understood as PSCCH/PSSCH transmission or sidelink data/information transmission.

Embodiments of the first aspect

An embodiment of the present disclosure provides a method for selecting sidelink resources, which is described from a terminal equipment. The terminal equipment can transmit sidelink data to other terminal equipments, and therefore the terminal equipment needs to perform resource selection/reselection to determine the transmission resource of the sidelink data. From the perspective of sidelink data transmission, the terminal equipment of the embodiments of the present disclosure is a transmitting device, and the other terminal equipments are receiving devices.

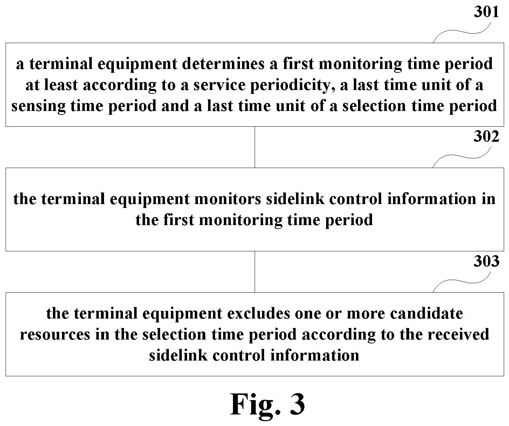

FIG. 3 is a schematic diagram of a method for selecting resources according to an embodiment of the present disclosure, as shown in FIG. 3, the method including:

301, a terminal equipment determines a first monitoring time period at least according to a service periodicity, a last time unit of a sensing time period and a last time unit of a selection time period;
302, the terminal equipment monitors sidelink control information in the first monitoring time period; and
303, the terminal equipment excludes one or more candidate resources in the selection time period according to the received sidelink control information.

It should be noted that FIG. 3 only schematically illustrates the embodiment of the present disclosure, but the present disclosure is not limited thereto. For example, the execution order between the operations may be appropriately adjusted, and some other operations may be added or some of the operations may be reduced. Those skilled in the art may make appropriate modifications according to the above content, which are not limited to the description of FIG. 3 described above.

In an embodiment of the present disclosure, the terminal equipment may perform sidelink resource selection or re-selection, referred to as (re-) selection, including resource exclusion. The resource re-selection may be triggered by a result of resource re-evaluation or preemption detection performed by the terminal equipment, and "resource selection or re-selection" may also be referred to as "resource selection/resource re-selection/resource re-evaluation/preemption detection". With regard to the specific contents of resource selection/resource re-selection/resource re-evaluation/ preemption detection, and resource exclusion, reference can be made to the related art, which will not be described in detail herein.

In some embodiments, the service periodicity is a periodicity of a service that a terminal equipment is intended to avoid, and the service periodicity is less than 100 milliseconds. The time unit in the embodiments of the present disclosure represents a logical time unit, that is, a time unit belonging to a sidelink resource pool. The time unit may be a sub-frame, a slot, or a symbol.

It is assumed that T milliseconds can be converted into $P_T$ time units, also referred to simply as $P_T$ corresponding to T milliseconds. For the physical time unit $t_x^{SL}$, the logical time unit (time unit) corresponding thereto may be denoted as $x$ or $t_x'^{SL}$ or other forms. For convenience of description, the embodiments of the present disclosure uses x to denote a time unit corresponding to the physical time unit $t_x^{SL}$.

In some embodiments, the terminal equipment determines a reference time period, the last time unit of the reference time period being the last time unit of the sensing time period, a time length of the reference time period being equal to the service periodicity; periodically repeats the selection time period one or more times in a backward time direction according to the service periodicity, to obtain one or more periodic time periods; and determines a time period in which the reference time period and the one or more periodic time periods at least partially overlap as the first monitoring time period.

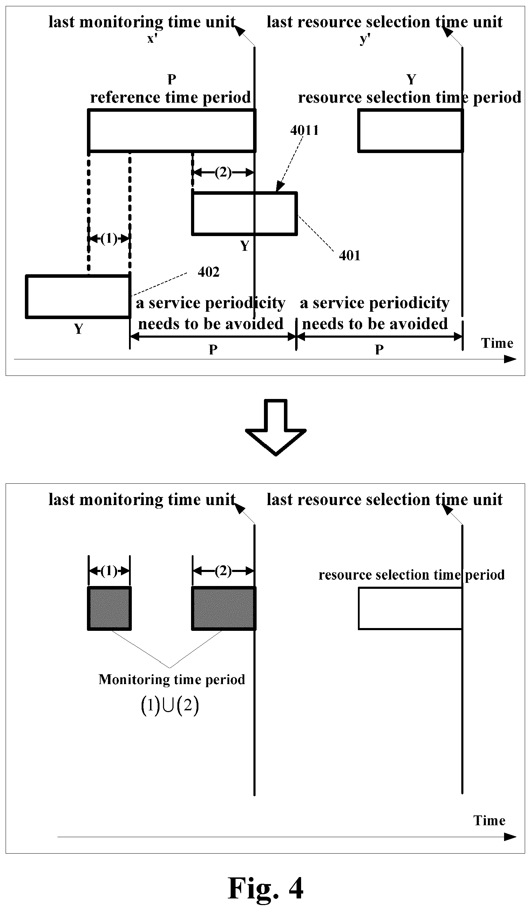

FIG. 4 is an exemplary diagram of determining a first monitoring time period according to an embodiment of the present disclosure. The device performs resource selection in a resource selection period. If the device wants to avoid the periodic service with the periodicity P when selecting resources, the device needs to monitor the SCI in the first monitoring time period determined in the embodiments of the present disclosure. Otherwise, there will be some periodic services with a periodicity P that the device cannot avoid.

In the embodiments of the present disclosure, for a periodic service with a periodicity being less than 100 milliseconds, in other words, the periodic service with the periodicity P is a periodic service with a periodicity being less than 100 milliseconds, denoted as P < $P_{100}$, where 100 milliseconds is converted into a logical time unit $P_{100}$, that is, $P_{100}$ denotes the number of time units included in 100 milliseconds.

As shown in FIG. 4, the last time unit that the device can monitor is denoted as *x'*, and the reference time period includes the time unit *x'* - P + 1, *x'* - P + 2, ..., *x'* - 1, *x'*. The last time unit of the reference time period is *x'*, and the time length of the reference time period is equal to *P*.

As shown in FIG. 4, the resource selection time period includes time units in which the device is capable of performing resource selection. The resource selection time period includes Y time units. The last time unit of the resource selection time period is denoted as *y'*, and *y'* is the last time unit that the device can perform the resource selection. The time interval between the last monitored time unit and the last resource selection time unit is denoted as *y'* - *x'*.

For example, as shown in FIG. 4, the resource selection time period may be periodically repeated with P as a periodicity in the backward time axis direction, so that a plurality of periodic time periods 401 and 402 may be obtained. The plurality of periodic time periods include copies of at least two resource selection time periods that are periodically repeated. The intersection of the plurality of periodic time periods with the reference time period is the first monitoring time period (including the two time periods (1) and (2) shown in FIG. 4). The device may avoid periodic service with a periodicity *P* as long as it monitors time units included in the first monitoring time period.

In some embodiments, the terminal equipment determines a reference time period, the last time unit of the reference time period being the last time unit of the sensing time period, a time length of the reference time period being equal to the service periodicity; periodically repeats the selection time period in a backward time direction for one or more times according to the service periodicity to obtain a last periodic time period at least partially overlapping with the reference time period, a last time unit in the last periodic time period along the reference time period being divided into a first time period and a second time period; and offsets the second time period in a backward time direction by a time length of the service periodicity, and determines the first time period and the offset second time period as the first monitoring time period.

For example, as shown in FIG. 4, the resource selection time period may be periodically repeated with P as a periodicity in the backward time axis direction, so that a plurality of periodic time periods 401 and 402 may be obtained. The last periodic time period 401 at least partially overlapping with the reference time period can be obtained. The last time unit in the last periodic time period along the reference time period is divided into a first time period (2) and a second time period 4011; and the second time period 4011 in a backward time direction is offset by a time length (i.e., a time period (1)) of the service periodicity, and the first time period (2) and the offset second time period (1) are determined as the first monitoring time period. The device may avoid serviceperiodic service with a periodicity *P* as long as it monitors time units included in the first monitoring time period.

In some embodiments, the first monitoring time period includes a time unit x;

x = y - k × P; when $y \leq x' + (\alpha - 1) \times P$; k = α - 1; otherwise, *k* = α, $\alpha = \left\lceil \frac{y' - x'}{P} \right\rceil$ ; where, x' denotes the last time unit of the sensing time period, P denotes the service periodicity, y' denotes the last time unit of the selection time period, and y denotes a time unit in the selection time period.

In some embodiments, the first monitoring time period includes a time unit x;

$$A = x' - y + P \times \left\lceil \frac{y' - x'}{P} \right\rceil$$

x = x' - *mod*(A, P), , where, *mod*() denotes a modulo operation, x' denotes the last time unit of the sensing time period, P denotes the service periodicity, y' denotes the last time unit of the selection time period, and y denotes a time unit in the selection time period.

In some embodiments, the first monitoring time period includes a time unit x;

$$B = y - P \times \left\lceil \frac{y'-x'}{P} \right\rceil - x' + P$$

x = x' - P + mod(B, P), , where, *mod*() denotes a modulo operation, x' denotes the last time unit of the sensing time period, P denotes the service periodicity, y' denotes the last time unit of the selection time period, and y denotes a time unit in the selection time period.

In some embodiments, the service periodicity is less than a time interval between the last time unit of the sensing time period and the last time unit of the selection time period. That is, $P < y' - x'$.

In some embodiments, a time length of the first monitoring time period is less than or equal to the service periodicity.

In some embodiments, the time length of the selection time period is less than the service periodicity.

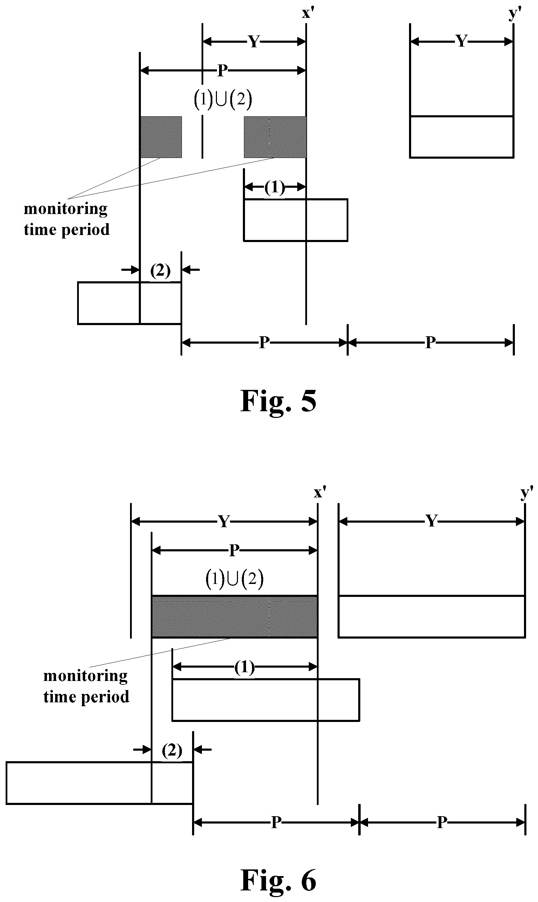

FIG. 5 is an exemplary diagram of a first monitoring time period according to an embodiment of the present disclosure, schematically illustrating the above expressions and the meanings of related variables; wherein, $Y < P$.

FIG. 6 is another exemplary diagram of a first monitoring time period according to an embodiment of the present disclosure, schematically illustrating the above expressions and the meanings of related variables; wherein, $Y > P$.

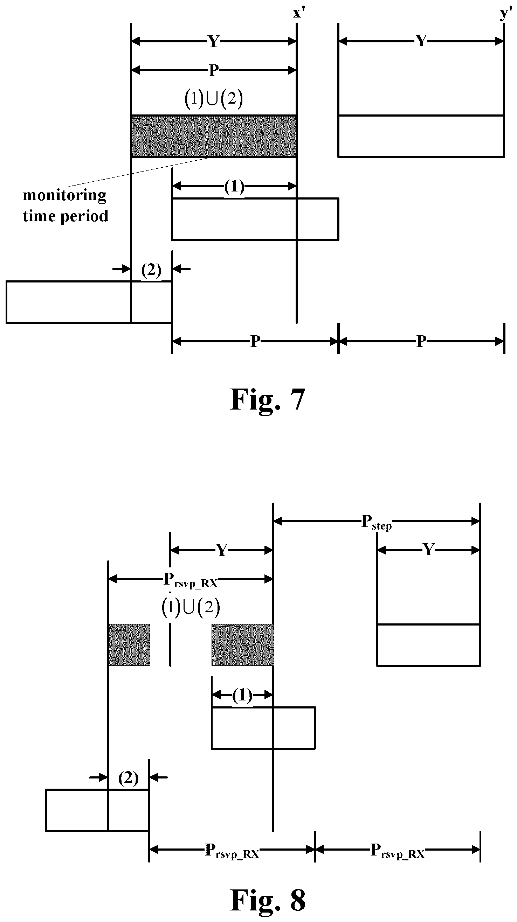

FIG. 7 is another exemplary diagram of a first monitoring time period according to an embodiment of the present disclosure, schematically illustrating the above expressions and the meanings of related variables; wherein, $Y = P$.

In the embodiments of the present disclosure, no limitation is placed on how to determine the last time unit *x'* that the device can monitor. For example, *x'* is a time unit in which a periodic service of 100 milliseconds is monitored; or *x'* is a time unit in which an aperiodic service is monitored; or *x'* is the last time unit that can be monitored, as determined by the processing capability of the device.

In some embodiments, the last time unit of the sensing time period is: a time unit $y' - P_{100}$, where *y'* denotes the last time unit of the selection time period and $P_{100}$ denotes the number of time units included in 100 milliseconds.

In some embodiments, the last time unit of the sensing time period is: the last time unit temporally preceding a physical time unit $n - T_{proc,0}^{SL}$, wherein *n* denotes a physical time unit for a higher layer to trigger resource selection, and $T_{proc,0}^{SL}$ denotes a processing time, in units of physical time units.

In some embodiments, the last time unit of the sensing time period is: the last time unit temporally preceding a physical time unit $t_{z'}^{SL} - T$ ; where, *z'* denotes the first time unit of the selection time period, $t_{z'}^{SL}$ denotes a first physical time unit of the selection time period, and *T* denotes a processing time, in units of physical time units.

For example, $T = T_{proc,0}^{SL} + T_{proc,1}^{SL} + 1$ , or $T = T_{proc,0}^{SL} + T_{proc,1}^{SL}$ , where $T_{proc,0}^{SL}$ and $T_{proc,1}^{SL}$ denotes processing time, in units of physical time units.

Assuming that the time unit is a slot, $T_{proc,0}^{SL}$ and $T_{proc,1}^{SL}$ may follow the values in Standard TS 38.214, e.g. as shown in Tables 2 and 3.

Table 2

| sub-carrier spacing | $T_{proc,0}^{SL}$ in the unit of physical slots |
|---|---|
| 15kHz | 1 |
| 30kHz | 1 |
| 60kHz | 2 |
| 120kHz | 4 |

Table 3

| sub-carrier spacing | $T^{SL}_{proc,1}$ in the unit of physical slots |
|---|---|
| 15kHz | 3 |
| 30kHz | 5 |
| 60kHz | 9 |
| 120kHz | 17 |

FIG. 8 is another exemplary diagram of a first monitoring time period according to an embodiment of the present disclosure, in which a time unit is replaced with a slot. The device determines *Y* physical slots (also corresponding to Y logical slots) within the resource selection window, wherein the last physical slot is $t^{SL}_{y'}$ . Here, *y'* denotes a logical slot index, and after *y'* is converted into a physical slot, resulting physical slot index is denoted as $t^{SL}_{y'}$ . The last physical slot that the device can monitor is physical slot $t^{SL}_{x'}$ , where *x'* = *y'* - $P_{step}$.

The embodiments of the present disclosure do not limit how $P_{step}$ is determined. For example, in LTE V2X partial sensing, the last physical slot (sub-frame) that the device can monitor is $t^{SL}_{x'}$ , where *x'* = *y'* - $P_{step}$, $P_{step}$ is the number of logical slots obtained after converting 100 milliseconds into logical slots. If the device needs to monitor the periodic service with a periodicity of $P_{rsvp\_RX}$ ($P_{rsvp\_Rx}$ < $P_{step}$, $P_{rsvp\_RX}$ in logical slots), for a physical slot $t^{SL}_{y}$ in Y physical slots, the device monitors a physical slot $t^{SL}_{z}$ , where *z* = *y'* - $P_{step}$ - *mod*(A, $P_{rsvp\_RX}$), and

$$A = y' - P_{step} - y + P_{rsvp\_RX} \times \left\lceil \frac{P_{step}}{P_{rsvp\_RX}} \right\rceil .$$

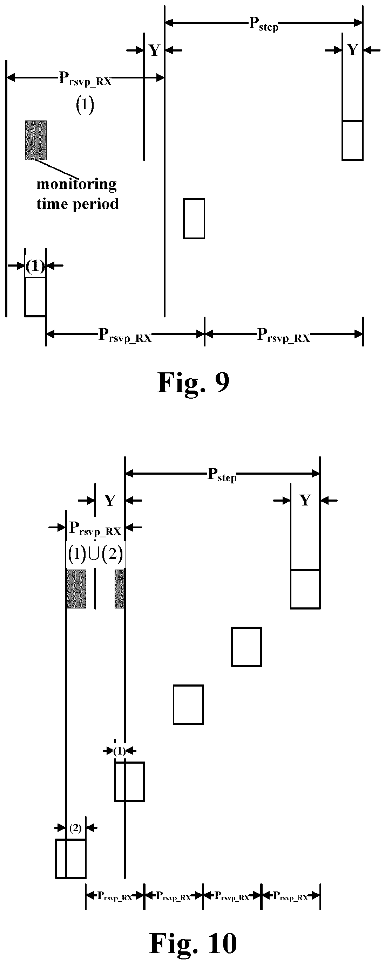

FIG. 9 is another exemplary diagram of a first monitoring time period according to an embodiment of the present disclosure, and the value of Y in FIG. 9 is smaller than that in FIG. 8. As shown in FIG. 8, the monitoring time period determined in the embodiments of the present disclosure can actually be regarded as Y slots cyclically shifted within the reference period. As shown in FIG. 9, when the value of Y becomes small, the monitoring time period is actually not cyclically shifted, or the shift amount of the cyclic shift is zero, which is a special case of cyclic shift.

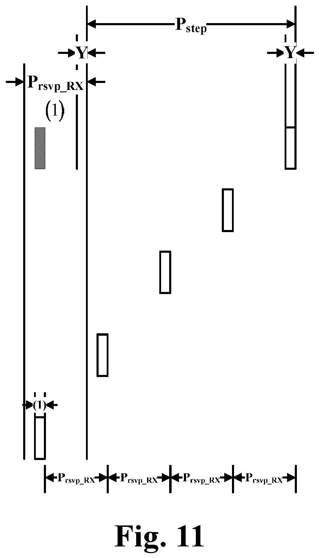

FIG. 10 is another exemplary diagram of a first monitoring time period according to an embodiment of the present disclosure, and FIG. 11 is another exemplary diagram of a first monitoring time period according to an embodiment of the present disclosure. Compared with FIGs. 8 and 9, the value of $\left\lceil \frac{P_{step}}{P_{rsvp\_RX}} \right\rceil$ in FIGs. 10 and 11 becomes larger.

More specifically, $\left\lceil \frac{P_{step}}{P_{rsvp\_RX}} \right\rceil = 2$ in FIGs. 8 and 9, and $\left\lceil \frac{P_{step}}{P_{rsvp\_RX}} \right\rceil = 4$ in FIGs. 10 and 11. Thus, it can be seen that the embodiments of the present disclosure can be applicable to different parameter configuration situations.

In some embodiments, the terminal equipment further monitors sidelink control information in a union set formed by a second monitoring time period and the first monitoring time period; wherein a last time unit of the second monitoring time period is the last time unit of the sensing time period, and a time length of the second monitoring time period is equal to the service periodicity or the time length of the selection time period.

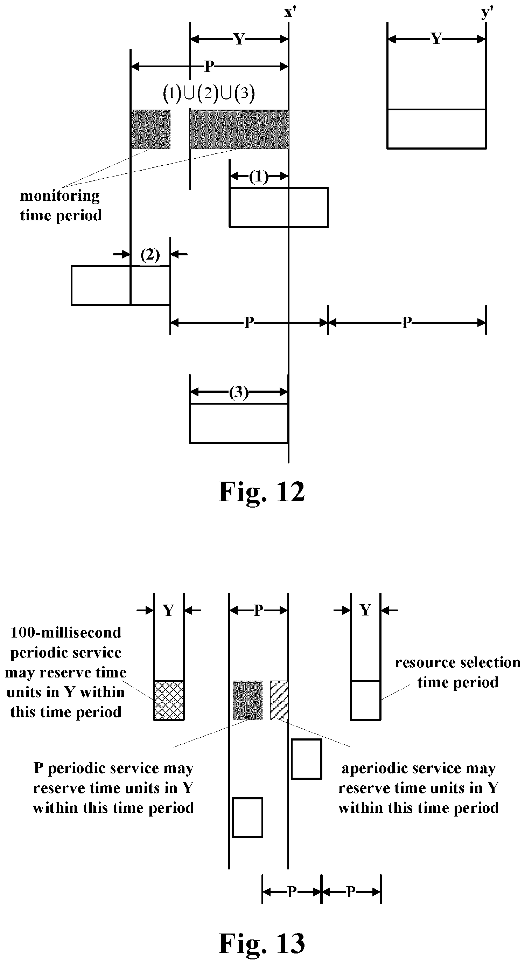

FIG. 12 is an exemplary diagram of a monitoring time period according to an embodiment of the present disclosure. For example, the monitoring time period of the device includes a union set of a first monitoring time period determined using an embodiments of the present disclosure and a second monitoring time period determined using LTE V2X sensing.

As shown in FIG. 12, the time periods (1) and (2) are first monitoring time periods determined according to an embodiment of the present disclosure; the time period (3) is a second monitoring time period determined according to e.g. LTE V2X partial sensing, wherein the last time unit of the time period (3) is x'. The time period (3) includes Z time units, where Z is the minimum of P and Y, i.e. Z = *min(P, Y)*. As shown in FIG. 12, the monitoring time period is a union set of the time periods (1), (2) and (3).

The first monitoring time period is schematically described above, and resource selection or resource exclusion of the device is described below.

In some embodiments, the terminal equipment receives first sidelink control information indicating that the service periodicity is $P_{rsvp\_RX}$ in a time unit m, and a reference signal received power (RSRP) obtained based on the first sidelink control information is higher than the RSRP threshold, and the terminal equipment excludes candidate resources as follows:

the candidate resource $R_{x,y+j\times P_{rsvp\_TX}}$ overlapping with one or more time-frequency resources determined based on the first sidelink control information or based on second sidelink control information able to be received at a time unit $m + q \times P_{rsvp\_RX}$;

where, $j = 0, 1, ..., C_{resel} - 1$, $q = 1, 2, ..., Q$, $C_{resel}$ denotes the number of time units that the terminal equipment needs

$$Q = \left\lceil \frac{P_{step}}{P_{rsvp\_RX}} \right\rceil$$

to transmit; if $P_{rsvp\_RX} < P_{step}$, and the time unit m is in the reference time period, ⎯⎯⎯⎯⎯⎯⎯⎯⎯⎯, otherwise Q = 1, $P_{step}$ is the time interval between the last time unit of the sensing time period and the last time unit of the selection time period, $P_{rsvp\_TX}$ denotes a service periodicity that the terminal equipment needs to perform transmission, and $R_{x,y}$ denotes a number of consecutive sub-channels with a frequency lowest sub-channel x located at the time unit *y*.

The description above is only made by taking the service with a certain periodicity $P_{rsvp\_RX}$ as an example, when the device needs to monitor more than one service with a periodicity $P_{rsvp\_RX}$, each periodic service will correspond to a monitoring time period, and the monitoring time period is the first monitoring time period described above, or a union set of the first monitoring time period and the second monitoring time period. The device monitors the union set of all monitoring time periods.

A certain time unit that the terminal equipment needs to monitor may be determined in order to monitor a certain periodic service, but the terminal equipment is not limited to only monitoring the periodic service in the time unit, and the terminal equipment monitors the SCI indifferently. For example, even if a certain time unit is determined in order to monitor P1 periodic service, P2 periodic service may be received in the time unit. For convenience of explanation, the monitoring time period determined by the terminal equipment for monitoring the P periodic service is simply referred to as the monitoring time period of the P periodic service.

The device may need to monitor and avoid a plurality of periodic services, and for different periodic services, a same time unit is selected as the last time unit that the device can monitor, which is beneficial for reducing the total number of time units that the device needs to monitor, thereby saving power. This is because the monitoring time periods for different periodic services determined based on the same last time unit may have an intersection, and monitoring the intersection can obtain a resource reservation situation of multiple periodic services, which actually reduces the number of time units required to be monitored by the device, and is beneficial for reducing power consumption.

For example, for the purpose of monitoring 100-millisecond periodic service, the monitoring time period of the 100-millisecond periodic service may be determined according to the LTE V2X partial sensing, and the last time unit of the monitoring time period is denoted as x'. x' is used as the last time unit that the device can monitor to determine the monitoring time period of other periodic services with the periodicity being less than 100 milliseconds.

The above embodiments merely exemplify the embodiments of the present disclosure, but the present disclosure is not limited thereto, and appropriate modifications may be made on the basis of the above embodiments. For example, each of the above embodiments may be used alone or in combination with one or more of the above embodiments.

As can be seen from the above embodiments, the terminal equipment determines a first monitoring time period at least according to a service periodicity, a last time unit of a sensing time period and a last time unit of a selection time period; and monitors the sidelink control information in the first monitoring time period. Hence, a resource collision with the short periodic service can be effectively avoided, thereby improving the reliability of the V2X, such as ensuring the pedestrian safety in the P2X.

Embodiments of the second aspect

An embodiment of the present disclosure provides a method for selecting sidelink resources, which is described from a terminal equipment, and the same content as the embodiments of the first aspect will not be described in detail.

An embodiment of the second aspect may be performed in combination with the embodiment of the first aspect or may be performed separately.

For the periodic service satisfying $P < P_{100}$, the determination of the monitoring time period is also based on the size relationship between $P$ and $y' - x'$.

In some embodiments, the first monitoring time period includes a time unit x, $x = y - P$, P denotes the service periodicity, and y denotes a time unit in the selection time period. wherein the service periodicity is greater than or equal to a time interval between the last time unit of the sensing time period and the last time unit of the selection time period.

For example, if $P < y' - x'$, the monitoring time period is determined using the embodiments of the first aspect; if $P \geq y' - x'$, the monitoring time period is determined as follows: for the time unit $y$ in the resource selection period, the device needs to monitor the time unit $y - P$.

For another example, if $P < y' - x'$, for the time unit y in the resource selection time period, the device needs to monitor the time unit $x' - mod(A, P)$, where $A = x' - y + P \times \left\lceil \frac{y' - x'}{P} \right\rceil$; and if $P \geq y' - x'$, the device needs to monitor the time unit $y - P$ for the time unit y in the resource selection time period.

In some embodiments, the device monitors 100-millisecond periodic service and the device also monitors aperiodic service. The last time unit that the device can monitor is a time unit that the device determines in order to monitor the aperiodic service, and in other words, the device determines the last time unit based on monitoring the aperiodic service. In this case, instead of determining the monitoring time period to monitor $P$ periodic service based on the last time unit in which the 100-millisecond periodic service is monitored, the device determines the monitoring time period to monitor $P$ periodic service based on the last time unit in which the aperiodic service is monitored.

For example, the last time unit $x'$ determined by the device based on monitoring the 100-millisecond periodic service satisfies $y' - x' = P_{100}$, and the last time unit $x'$ determined by the device based on monitoring the aperiodic service may satisfy $y' - x' < P_{100}$. Since $y' - x' < P_{100}$, there may be $P$ such that $y' - x' \leq P < P_{100}$. If $P \geq y' - x'$, the device should not actually treat the $P$ periodic service as a short periodic service, otherwise there may still be an unavoidable $P$ periodic service.

FIG. 13 is an exemplary diagram of a monitoring time window according to an embodiment of the present disclosure, and as shown in FIG. 13, $P < y' - x'$, so the monitoring time period can be determined using the embodiments of the first aspect.

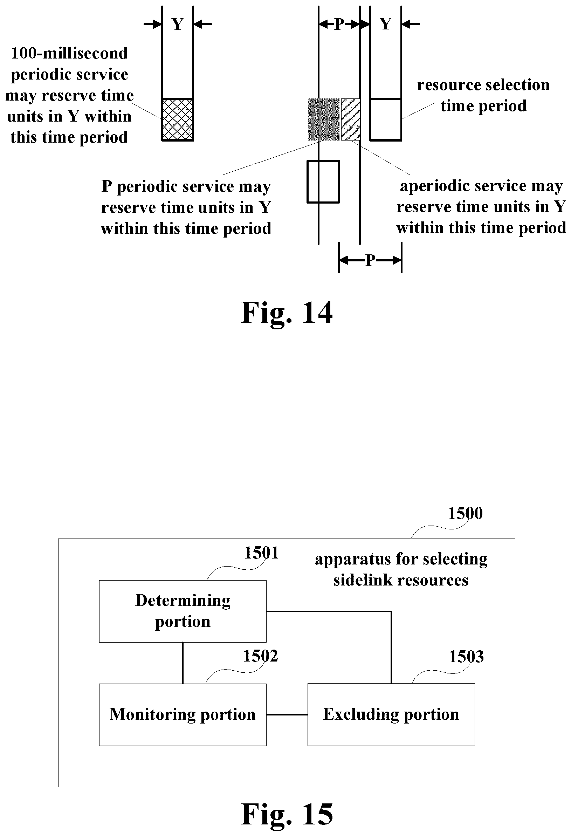

FIG. 14 is another exemplary diagram of a monitoring time window according to an embodiment of the present disclosure, and as shown in FIG. 14, $P > y' - x'$, if the embodiments of the first aspect are used, the determined monitoring time period may be limited to the reference time period. However, the $P$ periodic service outside the reference time period may still reserve resources for $Y$ time units of the resource selection time period. To solve this problem, when $P \geq y' - x'$, the device needs to monitor the time unit $y - P$ for the time unit y in the resource selection time period. The monitoring time period determined in this way is shown in FIG. 14.

The above embodiments merely exemplify the embodiments of the present disclosure, but the present disclosure is not limited thereto, and appropriate modifications may be made on the basis of the above embodiments. For example, each of the above embodiments may be used alone or in combination with one or more of the above embodiments.

As can be seen from the above embodiments, a resource collision with the short periodic service can be effectively avoided, thereby improving the reliability of the V2X, such as ensuring the pedestrian safety in the P2X.

Embodiments of the third aspect

An embodiment of the present disclosure provides a method for selecting sidelink resources, which is described from a terminal equipment, and the same content as the embodiments of the first and second aspects will not be described in detail. An embodiment of the third aspect may be performed in combination with the embodiments of the first and second aspects or may be performed separately.

In some embodiments, the terminal equipment determines whether to enable the first monitoring time period; and in a case where the first monitoring time period is enabled, monitors the sidelink control information in the first monitoring time period, and in a case where the first monitoring time period is disabled, does not monitor the sidelink control information in the first monitoring time period.

For example, the monitoring time period for the device to monitor a periodicity $P$ ($P < P_{100}$) service is not constant, but may be dynamically enabled or disabled. In order to monitor the service of the periodicity $P$, the device may need to additionally monitor some time units, and for these additional monitoring time units, the device may additionally consume power for monitoring, and it may therefore be considered to enable or disable the first monitoring time period.

In some embodiments, the terminal equipment, in a case where a periodic service with a periodicity of the service periodicity is received before the first monitoring time period, enables the first monitoring time period, and in a case where a periodic service with a periodicity of the service periodicity is not received before the first monitoring time period, disable the first monitoring time period.

For example, if the device has not received an SCI indicating the periodicity $P$ before the monitoring time period, the device considers that the probability of being interfered by the periodicity $P$ service at the time of resource selection is small, the device can therefore disable these additional monitoring time units, i.e. it is not necessary to increase the monitoring occasions specifically for the monitoring time period $P$ service. Power can be saved since no time units to monitor are added. Otherwise, the device monitors the determined monitoring time period according to the embodiments of the first and second aspects described above.

Through the embodiments of the present disclosure, the monitoring of the short periodic service can be dynamically turned on or off, so that the beneficial effect of saving power can be achieved.

The above embodiments merely exemplify the embodiments of the present disclosure, but the present disclosure is not limited thereto, and appropriate modifications may be made on the basis of the above embodiments. For example, each of the above embodiments may be used alone or in combination with one or more of the above embodiments.

Embodiments of the fourth aspect

An embodiment of the present disclosure provides an apparatus for selecting sidelink resources. The apparatus may be, for example, a terminal equipment or may be a certain or some parts or components configured in the terminal equipment, and the same content as the embodiments of the first to third aspects will not be described in detail.

FIG. 15 is a schematic diagram of an apparatus for selecting sidelink resources according to an embodiment of the present disclosure. As shown in FIG. 15, an apparatus 1500 for selecting sidelink resources, includes:

>  a determining portion 1501 configured to determine a first monitoring time period at least according to a service periodicity, a last time unit of a sensing time period and a last time unit of a selection time period;
>  a monitoring portion 1502 configured to monitor sidelink control information in the first monitoring time period; and
>  an excluding portion 1503 configured to exclude one or more candidate resources in the selection time period according to the received sidelink control information.

In some embodiments, the first monitoring time period includes a time unit x;

$$\alpha = \left\lceil \frac{y' - x'}{P} \right\rceil$$

$x = y - k \times P$; when $y \leq x' + (\alpha - 1) \times P$; $k = \alpha - 1$; otherwise, $k = \alpha$, where, $x'$ denotes the last time unit of the sensing time period, $P$ denotes the service periodicity, $y'$ denotes the last time unit of the selection time period, and y denotes a time unit in the selection time period.

In some embodiments, the first monitoring time period includes a time unit x;

$$A = x' - y + P \times \left\lceil \frac{y' - x'}{P} \right\rceil$$

$x = x' - mod(A, P)$, where, $mod()$ denotes a modulo operation, $x'$ denotes the last time unit of the sensing time period, $P$ denotes the service periodicity, $y'$ denotes the last time unit of the selection time period, and y denotes a time unit in the selection time period.

In some embodiments, the first monitoring time period includes a time unit x;

$$B = y - P \times \left\lceil \frac{y' - x'}{P} \right\rceil - x' + P$$

$x = x' - P + mod(B, P)$, where, $mod()$ denotes a modulo operation, $x'$ denotes the last time unit of the sensing time period, $P$ denotes the service periodicity, $y'$ denotes the last time unit of the selection time period, and y denotes a time unit in the selection time period.

In some embodiments, the determining portion 1501 is used to: determine a reference time period, the last time unit of the reference time period being the last time unit of the sensing time period, a time length of the reference time period being equal to the service periodicity; periodically repeat the selection time period one or more times in a backward time direction according to the service periodicity, to obtain one or more periodic time periods; and determine a time period in which the reference time period and the one or more periodic time periods at least partially overlap as the first monitoring time period.

In some embodiments, the determining portion 1501 is used to: determine a reference time period, the last time unit of the reference time period being the last time unit of the sensing time period, a time length of the reference time period being equal to the service periodicity; periodically repeat the selection time period in a backward time direction for one or more times according to the service periodicity to obtain a last periodic time period at least partially overlapping with the reference time period, a last time unit in the last periodic time period along the reference time period being divided into a first time period and a second time period; and offset the second time period in a backward time direction by a time length of the service periodicity, and determine the first time period and the offset second time period as the first monitoring time period.

In some embodiments, the monitoring portion 1502 is further used to monitor sidelink control information in a union set formed by a second monitoring time period and the first monitoring time period; wherein a last time unit of the second monitoring time period is the last time unit of the sensing time period, and a time length of the second monitoring time period is equal to the service periodicity or the time length of servicethe selection time period.

In some embodiments, the service periodicity is less than a time interval between the last time unit of the sensing time period and the last time unit of the selection time period.

In some embodiments, a time length of the first monitoring time period is less than or equal to the service periodicity.

In some embodiments, the time length of the selection time period is less than the service periodicity.

In some embodiments, the first monitoring time period includes a time unit x, $x = y - P$, P denotes the service periodicity, and y denotes a time unit in the selection time period.

In some embodiments, the service periodicity is greater than or equal to a time interval between the last time unit of the sensing time period and the last time unit of the selection time period.

In some embodiments, the service periodicity is a periodicity of a service that a terminal equipment is intended to avoid, and the service periodicity is less than 100 milliseconds.

In some embodiments, the last time unit of the sensing time period is one of the following:

a time unit $y' - P_{100}$; where $y'$ denotes the last time unit of the selection time period, and $P_{100}$ denotes the number of time units included in 100 milliseconds;

or, a last time unit temporally preceding a physical time unit $n - T_{proc,0}^{SL}$; where, $n$ denotes a physical time unit where a high-layer triggers resource selection, and $T_{proc,0}^{SL}$ denotes a processing time, in units of physical time units;

or, a last time unit temporally preceding a physical time unit $t_{z'}^{SL} - T$; where, $z'$ denotes the first time unit of the selection time period, $t_{z'}^{SL}$ denotes a first physical time unit of the selection time period, and $T$ denotes a processing time, in units of physical time units.

In some embodiments, $T = T_{proc,0}^{SL} + T_{proc,1}^{SL} + 1$, or $T = T_{proc,0}^{SL} + T_{proc,1}^{SL}$, where $T_{proc,0}^{SL}$ and $T_{proc,1}^{SL}$ denotes processing time, in units of physical time units.

In some embodiments, the first sidelink control information indicating that the service periodicity is $P_{rsvp\_RX}$ is received in a time unit m, and a reference signal received power (RSRP) obtained based on the first sidelink control information is higher than the RSRP threshold,
the excluding portion 1503 excludes the following candidate resources that:

the candidate resource $R_{x,y+j \times P_{rsvp\_TX}}$ overlapping with time-frequency resources determined based on the first sidelink control information or based on second sidelink control information able to be received at a time unit $m + q \times P_{rsvp\_RX}$;
where, $j = 0, 1, ..., C_{resel} - 1$, $q = 1, 2, ..., Q$, $C_{resel}$ denotes the number of time units that the terminal equipment needs to transmit; if $P_{rsvp\_RX} < P_{step}$, and the time unit m is in the reference time period, $Q = \left\lceil \frac{P_{step}}{P_{rsvp\_RX}} \right\rceil$, otherwise Q = 1, $P_{step}$ is the time interval between the last time unit of the sensing time period and the last time unit of the selection time period, $P_{rsvp\_TX}$ denotes a service periodicity that the terminal equipment needs to transmit, and $R_{x,y}$ denotes a number of consecutive sub-channels with a frequency lowest sub-channel x located at the time unit $y$.

In some embodiments, the determining portion 1501 is further used to: determine whether to enable the first monitoring time period; and in a case where the first monitoring time period is enabled, monitor the sidelink control information in the first monitoring time period, and in a case where the first monitoring time period is disabled, not monitor the sidelink control information in the first monitoring time period.

In some embodiments, in a case where a periodic service with a period of the service periodicity is received before the first monitoring time period, the first monitoring time period is enabled, and in a case where a periodic service with a period of the service periodicity is not received before the first monitoring time period, the first monitoring time period is disabled.

The above embodiments merely exemplify the embodiments of the present disclosure, but the present disclosure is not limited thereto, and appropriate modifications may be made on the basis of the above embodiments. For example, each of the above embodiments may be used alone or in combination with one or more of the above embodiments.

It should be noted that only the components or modules related to the present disclosure have been described above, but the present disclosure is not limited thereto. The apparatus 1500 for selecting sidelink resources may further include other components or modules, and related art may be referred to for details of these components or modules.

In addition, for the sake of simplicity, Fig. 15 exemplarily shows only the connection relationship or signal trend between the various components or modules, however, it should be clear to a person skilled in the art that various related techniques such as bus connection may be used. The various components or modules described above may be implemented by hardware facilities such as a processor, a memory, a transmitter, a receiver, etc.; implementation of the present disclosure is not limited thereto.

As can be seen from the above embodiments, the terminal equipment determines a first monitoring time period at least according to a service periodicity, a last time unit of a sensing time period and a last time unit of a selection time period; and monitors the sidelink control information in the first monitoring time period. Hence, a resource collision with the short periodic service can be effectively avoided, thereby improving the reliability of the V2X, such as ensuring the pedestrian safety in the P2X.

Embodiments of the fifth aspect

An embodiment of the present disclosure further provides a communication system, which can refer to FIG. 1, and the same content as the embodiments of the first to fourth aspects will not be described in detail.

In some embodiments, the communication system 100 may include at least:

a terminal equipment 102 configured to determine a first monitoring time period at least according to a service periodicity, a last time unit of a sensing time period and a last time unit of a selection time period; monitor sidelink control information in the first monitoring time period; and exclude one or more candidate resources in the selection time period according to the received sidelink control information.

An embodiment of the present disclosure further provides a network device, which may be, for example, a base station, but the present disclosure is not limited thereto, and may also be other network devices.

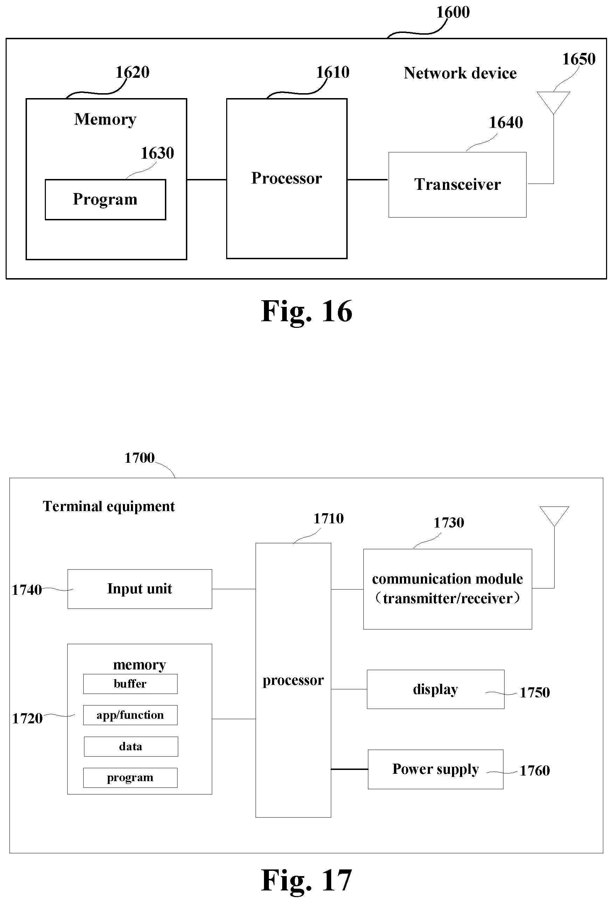

FIG. 16 is a configuration diagram of a network device according to an embodiment of the present disclosure. As shown in FIG. 16, the network device 1600 may include a processor 1610 (such as a central processing unit (CPU)) and a memory 1620; the memory 1620 is coupled to the processor 1610. The memory 1620 can store various data; a program 1630 for information processing is also stored and the program 1630 is executed under the control of the processor 1610.

In addition, as shown in FIG. 16, the network device 1600 may further include a transceiver 1640 and an antenna 1650, etc.; the functions of the above-mentioned components are similar to those of the relevant art, and will not be described again here. It is worth noting that the network device 1600 is not necessarily required to include all of the components shown in FIG. 16; in addition, the network device 1600 may further include components not shown in FIG. 16, with reference to the relevant art.

An embodiment of the present disclosure further provides a terminal equipment, but the present disclosure is not limited thereto, and may also be other devices.

FIG. 17 is a schematic diagram of a terminal equipment according to an embodiment of the present disclosure. As shown in FIG. 17, the terminal equipment 1700 may include a processor 1710 and a memory 1720; the memory 1720 stores data and program and is coupled to the processor 1710. It is worth noting that this figure is exemplary; other types of structures may also be used in addition to or instead of the structure to implement telecommunications functions or other functions.

For example, the processor 1710 may be configured to execute a program to implement the method for selecting sidelink resources as described in the embodiments of the first to third aspects. For example, the processor 1710 may be configured to control to: determine a first monitoring time period at least according to a service periodicity, a last time unit of a sensing time period and a last time unit of a selection time period; monitor sidelink control information in the first monitoring time period; and exclude one or more candidate resources in the selection time period according to the received sidelink control information.

As shown in FIG. 17, the terminal equipment 1700 may further include a communication module 1730, an input unit 1740, a display 1750, and a power supply 1760. The functions of the above-mentioned components are similar to those of the relevant art, and will not be described again here. It is worth noting that the terminal equipment 1700 is not necessarily required to include all of the components shown in FIG. 17, and the above components are not necessary; in addition, the terminal equipment 1700 may further include components not shown in FIG. 17, with reference to the relevant art.

Embodiments of the present disclosure further provide a computer program, wherein when the program is executed in a terminal equipment, the program causes the terminal equipment to execute the method for selecting sidelink resources as described in the embodiments of the first to third aspects.

Embodiments of the present disclosure further provide a storage medium in which a computer program is stored, wherein the computer program causes the terminal equipment to execute the method for selecting sidelink resources as described in the embodiments of the first to third aspects.

The above apparatus and method of the present disclosure may be implemented by hardware, or may be implemented by hardware in combination with software. The present disclosure relates to a computer-readable program that, when executed by a logic component, enables the logic component to implement the apparatus or constituent components described above, or enables the logic component to implement the various methods or steps described above. The present disclosure also relates to a storage medium for storing the above program, such as a hard disk, a magnetic disk, an optical disk, a DVD, a flash memory, etc.

The method/apparatus described in connection with embodiments of the present disclosure may be embodied directly in hardware, a software module executed by a processor, or a combination of both. For example, one or more of the functional blocks and/or one or more combinations of the functional blocks shown in the drawings may correspond to each software module or each hardware module of a computer program flow. These software modules may correspond to the respective steps shown in the drawings. The hardware modules may be implemented, for example, by solidifying the software modules using a field programmable gate array (FPGA).

A software module may be located in an RAM memory, a flash memory, an ROM memory, an EPROM memory, an EEPROM memory, a register, a hard disk, a removable disk, a CD-ROM, or any other form of storage medium known in the art. A storage medium may be coupled to the processor to enable the processor to read information from and write information to the storage medium, or the storage medium may be an integral part of the processor. The processor and the storage medium may reside in an ASIC. The software module may be stored in a memory of the mobile terminal or in a memory card insertable into the mobile terminal. For example, if the device (such as a mobile terminal) employs a large-capacity MEGA-SIM card or a large-capacity flash memory device, the software module can be stored in the MEGA-SIM card or the large-capacity flash memory device.

One or more of the functional blocks and/or one or more combinations of the functional blocks depicted in the accompanying drawings may be implemented as a general purpose processor, a digital signal processor (DSP), an application specific integrated circuit (ASIC), a field programmable gate array (FPGA) or other programmable logic devices, a discrete gate or a transistor logic device, a discrete hardware component, or any suitable combination thereof designed to perform the functions described in the present disclosure. One or more of the functional blocks and/or one or more combinations of the functional blocks depicted in the accompanying drawings may also be implemented as combination of computing devices, e.g., combination of a DSP and a microprocessor, a plurality of microprocessors, one or more microprocessors in communication with the DSP, or any other such configuration.

The present disclosure is described in combination with specific embodiments hereinabove, but a person skilled in the art should know clearly that the description is exemplary, but not limitation to the protection scope of the present disclosure. A person skilled in the art can make various variations and modifications to the present disclosure according to spirit and principle of the disclosure, and these variations and modifications should also be within the scope of the present disclosure.

As to implementations containing the above embodiments, following supplements are further disclosed.

Supplement 1. A method for selecting sidelink resources, including:

determining, by a terminal equipment, a first monitoring time period at least according to a service periodicity, a last time unit of a sensing time period and a last time unit of a selection time period;
monitoring sidelink control information in the first monitoring time period; and
excluding one or more candidate resources in the selection time period according to the received sidelink control information.

Supplement 2. The method according to the supplement 1, wherein the first monitoring time period includes a time unit x;

$x = y - k \times P$; when $y \leq x' + (\alpha - 1) \times P$, $k = \alpha - 1$; otherwise, $k = a$, $\quad \alpha = \left\lceil \dfrac{y' - x'}{P} \right\rceil$ , where x' denotes the last time unit of the sensing time period, P denotes the service periodicity, y' denotes the last time unit of the selection time period, and y denotes a time unit in the selection time period.

Supplement 3. The method according to the supplement 1, wherein the first monitoring time period includes a time unit x;

$x = x' - mod(A, P),$
$$A = x' - y + P \times \left\lceil \frac{y'-x'}{P} \right\rceil$$
, where, *mod()* denotes a modulo operation, x' denotes the last time unit of the sensing time period, P denotes the service periodicity, y' denotes the last time unit of the selection time period, and y denotes a time unit in the selection time period.

Supplement 4. The method according to the supplement 1, wherein the first monitoring time period includes a time unit x;

$x = x' - P + mod(B, P),$
$$B = y - P \times \left\lceil \frac{y'-x'}{P} \right\rceil - x' + P$$
, where, *mod()* denotes a modulo operation, x' denotes the last time unit of the sensing time period, P denotes the service periodicity, y' denotes the last time unit of the selection time period, and y denotes a time unit in the selection time period.

Supplement 5. The method according to the supplement 1, wherein the method further includes:

determining, by the terminal equipment, a reference time period, the last time unit of the reference time period being the last time unit of the sensing time period, and the time length of the reference time period being equal to the service periodicity;
periodically repeating the selection time period in a backward time direction for one or more times according to the service periodicity to obtain one or more periodic time periods; and
determining at least partially overlapped time periods of the reference time period and the one or more periodic time periods as the first monitoring time period.

Supplement 6. The method according to the supplement 1, wherein the method further includes:

determining, by the terminal equipment, a reference time period, the last time unit of the reference time period being the last time unit of the sensing time period, and the time length of the reference time period being equal to the service periodicity;
periodically repeating the selection time period in a backward time direction for one or more times according to the service periodicity to obtain a last periodic time period at least partially overlapping with the reference time period, a last time unit in the last periodic time period along the reference time period being divided into a first time period and a second time period; and
offsetting the second time period in a backward time direction by a time length of the service periodicity, and determine the first time period and the offset second time period as the first monitoring time period.

Supplement 7. The method according to any of the supplements 1 to 6, wherein the method further includes: the terminal equipment further monitors sidelink control information in a union set formed by a second monitoring time period and the first monitoring time period; wherein a last time unit of the second monitoring time period is the last time unit of the sensing time period, and a time length of the second monitoring time period is equal to the periodicity or the time length of the selection time period.

Supplement 8. The method according to any of the supplements 1 to 7, wherein the service periodicity is less than a time interval between the last time unit of the sensing time period and the last time unit of the selection time period.

Supplement 9. The method according to any of the supplements 1 to 8, wherein a time length of the first monitoring time period is less than or equal to the service periodicity.

Supplement 10. The method according to any of the supplements 1 to 9, wherein the time length of the selection time period is less than the service periodicity.

Supplement 11. The method according to the supplement 1, wherein the first monitoring time period includes a time unit x, $x = y - P$; where, P denotes the service periodicity, and y denotes a time unit in the selection time period.

Supplement 12. The method according to the supplement 11, wherein the service periodicity is greater than or equal to a time interval between the last time unit of the sensing time period and the last time unit of the selection time period.

Supplement 13. The method according to any of the supplements 1 to 12, wherein the service periodicity is a periodicity of a service that a terminal equipment is intended to avoid, and the service periodicity is less than 100 milliseconds.

Supplement 14. The method according to any of the supplements 1 to 13, wherein the last time unit of the sensing time period is one of the following:

a time unit $y'$ - $P_{100}$; where $y'$ denotes the last time unit of the selection time period, and $P_{100}$ denotes the number of time units included in 100 milliseconds;

or, a last time unit temporally preceding a physical time unit $n - T_{proc,0}^{SL}$ ; where, $n$ denotes a physical time unit where a high-layer triggers resource selection, and $T_{proc,0}^{SL}$ denotes a processing time, in units of physical time units;

or, a last time unit temporally preceding a physical time unit $t_{z'}^{SL} - T$ ; where, $z'$ denotes the first time unit of the selection time period, $t_{z'}^{SL}$ denotes a first physical time unit of the selection time period, and T denotes a processing time, in units of physical time units.

Supplement 15. The method according to the supplement 14, wherein $T = T_{proc,0}^{SL} + T_{proc,1}^{SL} + 1$ , or

$T = T_{proc,0}^{SL} + T_{proc,1}^{SL}$ , where, $T_{proc,0}^{SL}$ and $T_{proc,1}^{SL}$ denote processing times, in units of physical time units.

Supplement 16. The method according to any of the supplements 1 to 10, wherein the terminal equipment receives first sidelink control information indicating that the service periodicity is $P_{rsvp\_RX}$ in a time unit m, and a reference signal received power (RSRP) obtained based on the first sidelink control information is higher than the RSRP threshold, and the terminal equipment excludes candidate resources as follows:

the candidate resource $R_{x,y+j \times Prsvp\_TX}$ overlapping with time-frequency resources determined based on the first sidelink control information or based on second sidelink control information able to be received at a time unit m + q $\times P_{rsvp\_RX}$;

where, $j = 0, 1, ..., C_{resel}$ - 1, q = 1,2, ..., Q, $C_{resel}$ denotes the number of time units that the terminal equipment needs to transmit; if $P_{rsvp\_RX} < P_{step}$, and the time unit m is in the reference time period, $Q = \left\lceil \frac{P_{step}}{P_{rsvp\_RX}} \right\rceil$ , otherwise Q = 1, $P_{step}$ is the time interval between the last time unit of the sensing time period and the last time unit of the selection time period, $P_{rsvp\_TX}$ denotes a service periodicity that the terminal equipment needs to transmit, and $R_{x,y}$ denotes a number of consecutive sub-channels with a frequency lowest sub-channel x located at the time unit y.

Supplement 17. The method according to any of the supplements 1 to 16, wherein the method further includes:

determining, by the terminal equipment, whether to enable the first monitoring time period; and
in a case where the first monitoring time period is enabled, monitoring the sidelink control information in the first monitoring time period, in a case where the first monitoring time period is disabled, not monitoring the sidelink control information in the first monitoring time period.

Supplement 18. The method according to the supplement 17, wherein the terminal equipment, in a case where a periodic service with a periodicity of the service periodicity is received before the first monitoring time period, enables the first monitoring time period, and in a case where a periodic service with a periodicity of the service periodicity is not received before the first monitoring time period, disable the first monitoring time period.

Supplement 19. A terminal equipment, including a memory and a processor, the memory storing a computer program, the processor being configured to execute the computer program to implement the method for selecting sidelink resources according to any of the supplements 1 to 18.

**Claims**

1. An apparatus for selecting sidelink resources, comprising:

a determining portion configured to determine a first monitoring time period at least according to a service periodicity, a last time unit of a sensing time period and a last time unit of a selection time period;
a monitoring portion configured to monitor sidelink control information in the first monitoring time period; and
an excluding portion configured to exclude one or more candidate resources in the selection time period according to the received sidelink control information.

2. The apparatus according to claim 1, wherein the first monitoring time period includes a time unit x;

$$\alpha = \left\lceil \frac{y'-x'}{P} \right\rceil.$$

x = y - k × P; when $y \le x' + (\alpha - 1) \times P$, k = α - 1; otherwise, k = a, , where x' denotes the last time unit of the sensing time period, P denotes the service periodicity, y' denotes the last time unit of the selection time period, and y denotes a time unit in the selection time period.

3. The apparatus according to claim 1, wherein the first monitoring time period includes a time unit x;

$$A = x' - y + P \times \left\lceil \frac{y'-x'}{P} \right\rceil$$

x = x' - mod(A, P), , where, mod() denotes a modulo operation, x' denotes the last time unit of the sensing time period, P denotes the service periodicity, y' denotes the last time unit of the selection time period, and y denotes a time unit in the selection time period.

4. The apparatus according to claim 1, wherein the first monitoring time period includes a time unit x;

$$B = y - P \times \left\lceil \frac{y'-x'}{P} \right\rceil - x' + P$$

x = x' - P + mod(B, P), , where, mod() denotes a modulo operation, x' denotes the last time unit of the sensing time period, P denotes the service periodicity, y' denotes the last time unit of the selection time period, and y denotes a time unit in the selection time period.

5. The apparatus according to claim 1, wherein the determining portion is configured to:

determine a reference time period, the last time unit of the reference time period being the last time unit of the sensing time period, and the time length of the reference time period being equal to the service periodicity;
periodically repeat the selection time period in a backward time direction for one or more times according to the service periodicity to obtain one or more periodic time periods; and
determine at least partially overlapped time periods of the reference time period and the one or more periodic time periods as the first monitoring time period.

6. The apparatus according to claim 1, wherein the determining portion is configured to:

determine a reference time period, the last time unit of the reference time period being the last time unit of the sensing time period, and the time length of the reference time period being equal to the service periodicity;
periodically repeat the selection time period in a backward time direction for one or more times according to the service periodicity to obtain a last periodic time period at least partially overlapping with the reference time period, a last time unit in the last periodic time period along the reference time period being divided into a first time period and a second time period; and
offsett the second time period in a backward time direction by a time length of the service periodicity, and determine the first time period and the offset second time period as the first monitoring time period.

7. The apparatus according to claim 1, wherein the monitoring portion is further configured to: monitor sidelink control information in a union set formed by a second monitoring time period and the first monitoring time period; wherein a last time unit of the second monitoring time period is the last time unit of the sensing time period, and a time length of the second monitoring time period is equal to the service periodicity or the time length of servicethe selection time period.

8. The apparatus according to claim 1, wherein the service periodicity is less than a time interval between the last time unit of the sensing time period and the last time unit of the selection time period.

9. The apparatus according to claim 1, wherein a time length of the first monitoring time period is less than or equal to the service periodicity.

**10.** The apparatus according to claim 1, wherein the time length of the selection time period is less than the service periodicity.

**11.** The apparatus according to claim 1, wherein the first monitoring time period includes a time unit x, *x = y - P,* where, P denotes the service periodicity, and y denotes a time unit in the selection time period.

**12.** The apparatus according to claim 11, wherein the service periodicity is greater than or equal to a time interval between the last time unit of the sensing time period and the last time unit of the selection time period.

**13.** The apparatus according to claim 1, wherein the service periodicity is a periodicity of a service that a terminal equipment is intended to avoid, and the service periodicity is less than 100 milliseconds.

**14.** The apparatus according to claim 1, wherein the last time unit of the sensing time period is one of the following:

a time unit $y' - P_{100}$; where y' denotes the last time unit of the selection time period, and $P_{100}$ denotes the number of time units included in 100 milliseconds;

or, a last time unit temporally preceding a physical time unit $n - T_{proc,0}^{SL}$; where, n denotes a physical time unit where a high-layer triggers resource selection, and $T_{proc,0}^{SL}$ denotes a processing time, in units of physical time units;

or, a last time unit temporally preceding a physical time unit $t_{z'}^{SL} - T$; where, z' denotes the first time unit of the selection time period, $t_{z'}^{SL}$ denotes a first physical time unit of the selection time period, and T denotes a processing time, in units of physical time units.

**15.** The apparatus according to claim 1, wherein $T = T_{proc,0}^{SL} + T_{proc,1}^{SL} + 1$, or $T = T_{proc,0}^{SL} + T_{proc,1}^{SL}$; where, $T_{proc,0}^{SL}$ and $T_{proc,1}^{SL}$ denote processing times, in units of physical time units.

**16.** The apparatus according to claim 1, wherein first sidelink control information indicating that the service periodicity is $P_{rsvp\_RX}$ is received at a time unit m, and reference signal received power obtained based on the first sidelink control information is higher than a threshold,
and the excluding portion excludes the following candidate resources that:

the candidate resource $R_{x,y+j \times P_{rsvp\_TX}}$ overlapping with time-frequency resources determined based on the first sidelink control information or based on second sidelink control information able to be received at a time unit $m + q \times P_{rsvp\_RX}$;

where, j = 0,1, ..., $C_{resel}$ - 1, q = 1,2, ..., Q, $C_{resel}$ denotes the number of time units that the terminal equipment needs to transmit; if $P_{rsvp\_RX} < P_{step}$, and the time unit m is in the reference time period, $Q = \left\lceil \frac{P_{step}}{P_{rsvp\_RX}} \right\rceil$, otherwise Q = 1, $P_{step}$ is the time interval between the last time unit of the sensing time period and the last time unit of the selection time period, $P_{rsvp\_TX}$ denotes a service periodicity that the terminal equipment needs to transmit, and $R_{x,y}$ denotes a number of consecutive sub-channels with a frequency lowest sub-channel x located at the time unit y.

**17.** The apparatus according to claim 1, wherein the determining portion is further configured to: determine whether to enable the first monitoring time period; and
in a case where the first monitoring time period is enabled, monitoring the sidelink control information in the first monitoring time period, in a case where the first monitoring time period is disabled, not monitoring the sidelink control information in the first monitoring time period.

18. The apparatus according to claim 17, wherein, in a case where a periodic service with a period of the service periodicity is received before the first monitoring time period, the first monitoring time period is enabled, in a case where a periodic service with a period of the service periodicity is not received before the first monitoring time period, the first monitoring time period is disabled.

19. A method for selecting sidelink resources, comprising:

determining, by a terminal equipment, a first monitoring time period at least according to a service periodicity, a last time unit of a sensing time period and a last time unit of a selection time period;
monitoring sidelink control information in the first monitoring time period; and
excluding one or more candidate resources in the selection time period according to the received sidelink control information.

20. A communication system, comprising:
a terminal equipment configured to determine a first monitoring time period at least according to a service periodicity, a last time unit of a sensing time period and a last time unit of a selection time period; monitor sidelink control information in the first monitoring time period; and exclude one or more candidate resources in the selection time period according to the received sidelink control information.

**Fig. 1**

**Fig. 2**

301

a terminal equipment determines a first monitoring time period
at least according to a service periodicity, a last time unit of a
sensing time period and a last time unit of a selection time period

302

the terminal equipment monitors sidelink control information in
the first monitoring time period

303

the terminal equipment excludes one or more candidate
resources in the selection time period according to the received
sidelink control information

# Fig. 3

**Fig. 4**

x'   y'

Y

P

$(1)\cup(2)$

monitoring
time period

(1)

(2)

P    P

**Fig. 5**

x'   y'

Y    Y

P

$(1)\cup(2)$

monitoring
time period

(1)

(2)

P    P

**Fig. 6**

x'

y'

Y

P

(1)∪(2)

monitoring
time period

(1)

(2)

P

P

## Fig. 7

$P_{step}$

Y

Y

$P_{rsvp\_RX}$

(1)∪(2)

(1)

(2)

$P_{rsvp\_RX}$

$P_{rsvp\_RX}$

## Fig. 8

$P_{step}$

$P_{rsvp\_RX}$

(1)

Y

Y

monitoring
time period

(1)

$P_{rsvp\_RX}$

$P_{rsvp\_RX}$

**Fig. 9**

$P_{step}$

Y

Y

$P_{rsvp\_RX}$

(1)∪(2)

(1)

(2)

$P_{rsvp\_RX}$   $P_{rsvp\_RX}$   $P_{rsvp\_RX}$   $P_{rsvp\_RX}$

**Fig. 10**

**Fig. 11**

x'

y'

Y

P

(1)∪(2)∪(3)

monitoring
time period

(1)

(2)

P

P

(3)

## Fig. 12

Y

P

Y

100-millisecond
periodic service
may reserve time
units in Y within
this time period

resource selection
time period

P periodic service may
reserve time units in Y
within this time period

aperiodic service may
reserve time units in Y
within this time period

P

P

## Fig. 13

100-millisecond
periodic service
may reserve time
units in Y within
this time period

Y

P Y

resource selection
time period

P periodic service may
reserve time units in Y
within this time period

aperiodic service may
reserve time units in Y
within this time period

P

**Fig. 14**

1500

1501

apparatus for selecting
sidelink resources

Determining
portion

1502

1503

Monitoring portion

Excluding portion

**Fig. 15**

1600

Network device

1620

1610

1650

Memory

1630

Program

Processor

1640

Transceiver

## Fig. 16

1700

Terminal equipment

1710

1730

1740

Input unit

communication module
（transmitter/receiver）

memory

buffer

1720

app/function

processor

display

1750

data

program

Power supply

1760

## Fig. 17

**EP 4 236 516 A1**

## INTERNATIONAL SEARCH REPORT

| International application No. |
| --- |
| **PCT/CN2020/122997** |

| A. | CLASSIFICATION OF SUBJECT MATTER |
| --- | --- |

H04W 72/02(2009.01)i

According to International Patent Classification (IPC) or to both national classification and IPC

| B. | FIELDS SEARCHED |
| --- | --- |

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNPAT, CNKI, WPI, EPODOC: 边链路, 资源, 选择, 排除, 占用, 预留, 感知, 时间段, 监听, sidelink, resource, selection, exclude, occupied, reserved, sensing, time, period, monitor, V2X, V2V

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 109803321 A (CHINA ACADEMY OF TELECOMMUNICATIONS TECHNOLOGY) 24 May 2019 (2019-05-24) description paragraphs 75-101, claims 1-15 | 1-20 |
| X | CN 111586722 A (GOHIGH DATA NETWORKS TECHNOLOGY CO., LTD.) 25 August 2020 (2020-08-25) description paragraphs 136-165 | 1-20 |
| A | CN 111436035 A (ZHANXUN SEMICONDUCTOR (NANJING) CO., LTD.) 21 July 2020 (2020-07-21) entire document | 1-20 |
| A | US 2020053835 A1 (IDAC HOLDINGS, INC.,) 13 February 2020 (2020-02-13) entire document | 1-20 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **07 July 2021** | **21 July 2021** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2020/122997**

| Patent document cited in search report | | | Publication date (day/month/year) | Patent family member(s) | Publication date (day/month/year) |
|---|---|---|---|---|---|
| CN | 109803321 | A | 24 May 2019 | None | |
| CN | 111586722 | A | 25 August 2020 | None | |
| CN | 111436035 | A | 21 July 2020 | None | |
| US | 2020053835 | A1 | 13 February 2020 | None | |

Form PCT/ISA/210 (patent family annex) (January 2015)